# EUROPÄISCHE PATENTSCHRIFT

(11) **EP 3 810 377 B1**
(45) Veröffentlichungstag und Bekanntmachung des Hinweises auf die Patenterteilung: **21.02.2024**
(21) Anmeldenummer: 19730750.7
(22) Anmeldetag: 12.06.2019
(51) Int. Cl.: B25J 9/16

(54) **VERFAHREN UND SYSTEM ZUM ÜBERFÜHREN EINES ENDEFFEKTORS EINES ROBOTERS ZWISCHEN EINER ENDEFFEKTORPOSE UND EINER WEITEREN ENDEFFEKTORPOSE**
METHOD AND SYSTEM FOR TRANSFERRING AN END EFFECTOR OF A ROBOT BETWEEN AN END EFFECTOR POSE AND A FURTHER END EFFECTOR POSE
PROCÉDÉ ET SYSTÈME DE TRANSFERT D'UN EFFECTEUR TERMINAL D'UN ROBOT ENTRE UNE POSITION D'EFFECTEUR TERMINAL ET UNE AUTRE POSITION D'EFFECTEUR TERMINAL

(30) Priorität: 19.06.2018 DE 102018209870
(43) Veröffentlichungstag der Anmeldung: 28.04.2021
(73) Patentinhaber: KUKA Deutschland GmbH, 86165 Augsburg (DE)
(72) Erfinder: ALLMENDINGER, Felix, 86152 Augsburg (DE); FINKE, Markus, 86343 Königsbrunn (DE)
(74) Vertreter: Oelke, Jochen
(86) Internationale Anmeldenummer: PCT/EP2019/065319
(87) Internationale Veröffentlichungsnummer: WO 2019/243128

(56) Entgegenhaltungen:
- WO-A2-2013/037693
- US-A- 5 350 269
- US-B1- 6 408 224
- ZLAJPAH L ED - INSTITUTE OF ELECTRICAL AND ELECTRONICS ENGINEERS: "ON TIME OPTIMAL PATH CONTROL OF MANIPULATORS WITH BOUNDED JOINT VELOCITIES AND TORQUES", PROCEEDINGS OF THE 1996 INTERNATIONAL CONFERENCE ON ROBOTICS AND AUTOMATION. MINNEAPOLIS, APR. 22 - 28, 1996; [PROCEEDINGS OF THE INTERNATIONAL CONFERENCE ON ROBOTICS AND AUTOMATION], NEW YORK, IEEE, US, Bd. CONF. 13, 22. April 1996 (1996-04-22), Seiten 1572-1577, XP000775090, ISBN: 978-0-7803-2989-8

## Beschreibung

Die vorliegende Erfindung betrifft ein Verfahren und System zum Überführen eines Endeffektors eines Roboters zwischen einer Endeffektorpose und einer weiteren Endeffektorpose sowie ein Computerprogrammprodukt zur Durchführung des Verfahrens.

Roboteraufgaben bestehen häufig darin, einen Endeffektor eines Roboters von einer Ausgangs-Endeffektorpose in eine Ziel-Endeffektorpose zu überführen, häufig längs einer vorgegebenen Endeffektorbahn bzw. Abfolge von vorgegebenen Endeffektorposen.

Weist der Roboter dabei mehr Freiheitsgrade bzw. Achsen auf als die vorgegebenen Posen, muss diese (Aufgaben)Redundanz aufgelöst werden, um entsprechende Achsstellungen des Roboters zu ermitteln.

Hierzu sind in der Literatur diverse Verfahren bekannt, die zusätzliche Bedingungen berücksichtigen.

Die US 6,408,224 B1 offenbart ein Verfahren zur Reduktion des Berechnungsaufwandes für eine Roboterbahn unter Berücksichtigung einer aufgabenspezifischen Redundanz, in dem der gesamte Arbeitsraum des Roboters in gleichgroße, diskrete Elemente unterteilt wird.

Die WO 2013/037693 A2 offenbart ein Verfahren zum automatisierten Erzeugen von Arbeitsablaufplänen für die Bearbeitung eines Werkstücks unter Diskretisieren des Arbeitsraumes in einzelne diskrete Zustände.

Nachteilig kann dabei eine geringfügige Veränderung einer der Endeffektorposen zu signifikant anderen und entsprechend unerwarteten Achsstellungsverläufen führen.

Aufgabe der vorliegenden Erfindung ist es, das Überführen eines Endeffektors eines Roboters zwischen zwei Endeffektorposen zu verbessern.

Diese Aufgabe wird durch ein Verfahren mit den Merkmalen des Anspruchs 1 gelöst. Ansprüche 8, 9 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung ist/sind bzw. wird/werden zum Überführen eines Endeffektors eines Roboters zwischen einer Endeffektorpose und einer weiteren Endeffektorpose, in einer Ausführung in Abhängigkeit von einer, insbesondere manuellen, Aktivierung eines Kontroll-Betriebsmodus, insbesondere (nur), sofern ein Kontroll-Betriebsmodus aktiviert ist, für eine oder mehrere Achsen des Roboters, die nachfolgend ohne Beschränkung der Allgemeinheit auch als erste bzw. redundante Achse(n) bezeichnet wird/werden, in einer Ausführung vorab bzw. vor dem Überführen, insbesondere offline, für die Überführung zwischen der einen Endeffektorpose und der einen weiteren Endeffektorpose und Überführungen zwischen der einen Endeffektorpose und einer Schar anderer weiterer Endeffektorposen derselbe, einheitliche Verlauf der Stellung dieser (ersten bzw. redundanten) Achse(n) vorgegeben.

In einer Ausführung sind die eine Endeffektorpose eine Ausgangs-Endeffektorpose und die weiteren Endeffektorposen Ziel-Endeffektorposen. Gleichermaßen können in einer Ausführung auch die eine Endeffektorpose eine Ziel-Endeffektorpose und die weiteren Endeffektorposen Ausgangs-Endeffektorposen sein. Zur kompakteren, einheitlichen Darstellung werden daher ohne Beschränkung der Allgemeinheit die eine Endeffektorpose auch als erste Endeffektorpose und die weiteren Endeffektorposen als zweite Endeffektorposen bezeichnet, so dass in einer Ausführung die erste Endeffektorpose eine Ausgangs- oder Ziel-Endeffektorpose, die zweiten Endeffektorposen entsprechend umgekehrt Ziel- bzw. Ausgangs-Endeffektorposen sein können. Dabei können Ausgangs- und Ziel-Endeffektorposen auch Zwischenposen einer (längeren) Bahn sein.

In einer Ausführung wird bzw. ist wenigstens eine dieser (ersten bzw. zweiten) Endeffektorpose(n) vorab vorgegeben, in einer Weiterbildung auf Basis einer Benutzereingabe und/oder einer Bahnplanung. Eine Ziel-Endeffektorpose im Sinne der vorliegenden Erfindung kann somit insbesondere ein Zwischen- oder Endpunkt einer geplanten (Roboter)Endeffektorbahn sein. Die Schar weist in einer Ausführung wenigstens zwei, insbesondere wenigstens 10, vorzugsweise wenigstens 20, in einer Ausführung (theoretisch) unendlich (mögliche) weitere bzw. zweite Endeffektorposen auf.

Hierdurch kann in einer Ausführung eine unerwartete, starke Änderung des Verlaufs der Stellung dieser (ersten bzw. redundanten) Achse(n) vermieden und so in einer Weiterbildung die Sicherheit und/oder Bedienbarkeit des Roboters verbessert werden.

Durch eine Vorgabe vor der Überführung zwischen der ersten und zweiten Endeffektorpose bzw. eine offline-Vorgabe kann vorteilhaft eine Rechenlast, insbesondere -zeit, während der Überführung reduziert werden.

Nach einer Ausführung der vorliegenden Erfindung werden für eine oder mehrere weitere Achsen des Roboters, die nachfolgend ohne Beschränkung der Allgemeinheit auch als zweite bzw. abhängige Achse(n) bezeichnet wird/werden, in einer Ausführung in Abhängigkeit von einer Aktivierung des Kontroll-Betriebsmodus bzw. (nur), sofern der Kontroll-Betriebsmodus aktiviert ist, und/oder beim Überführen bzw. online, für die Überführung zwischen der einen bzw. ersten Endeffektorpose und der einen weiteren bzw. zweiten Endeffektorpose und für die Überführung(en) zwischen der einen bzw. ersten Endeffektorpose und einer oder mehrerer der anderen weiteren bzw. zweiten Endeffektorposen der Schar unterschiedliche Verläufe der Stellung dieser weiteren Achse(n) kommandiert.

Hierdurch kann in einer Ausführung die Redundanz des Roboters vorteilhaft ausgenutzt werden.

In einer Ausführung werden Stellungen der wenigstens einen bzw. ersten Achse auf Basis bzw. in Abhängigkeit von dem vorgegebenen einheitlichen Verlauf kommandiert, in einer Ausführung, insbesondere beim Überführen bzw. online, ermittelt. Zusätzlich oder alternativ werden in einer Ausführung Stellungen der wenigstens einen weiteren bzw. zweiten Achse auf Basis bzw. in Abhängigkeit von dem vorgegebenen einheitlichen Verlauf kommandiert, in einer Ausführung, insbesondere beim Überführen bzw. online, ermittelt.

Hierdurch kann in einer Ausführung vorteilhaft eine Rechenlast, insbesondere -zeit, während der Überführung (weiter) reduziert und/oder die Redundanz des Roboters vorteilhaft(er) ausgenutzt werden.

In einer Ausführung werden Stellungen der wenigstens einen bzw. ersten Achse auf Basis bzw. in Abhängigkeit von vorgegebenen Endeffektorposen kommandiert, die in einer Ausführung auf Basis bzw. in Abhängigkeit von einer Bedienereingabe und/oder, insbesondere kartesischen, Bahnplanung vorgegeben werden. Mit anderen Worten wird in einer Ausführung einer oder mehreren Endeffektorposen jeweils eine entsprechende Stellung der wenigstens einen bzw. ersten Achse zugeordnet.

Zusätzlich oder alternativ werden in einer Ausführung, insbesondere anschließend, Stellungen der wenigstens einen weiteren bzw. zweiten Achse auf Basis bzw. in Abhängigkeit von vorgegebenen Stellungen der wenigstens einen bzw. ersten Achse und/oder auf Basis bzw. in Abhängigkeit von (den) vorgegebenen Endeffektorposen kommandiert. Somit wird in einer Ausführung zu einer oder mehreren vorgegebenen Endeffektorposen zunächst, insbesondere auf Basis des vorgegebenen einheitlichen Verlaufs der Stellung dieser Achse, (jeweils) eine Stellung der wenigstens einen bzw. ersten Achse ermittelt und dann die Stellung der wenigstens einen weiteren bzw. zweiten Achse derart ermittelt, dass der Endeffektor bei der solcherart ermittelten Stellung der wenigstens einen bzw. ersten Achse die (jeweilige vorgegebene) Endeffektorpose einnimmt.

In einer Ausführung wird bzw. ist die wenigstens eine bzw. erste Achse auf Basis bzw. in Abhängigkeit von einer Benutzerauswahl vorgegeben bzw. auswählbar.

Hierdurch kann ein Benutzer in einer Ausführung gezielt eine unerwartete, starke Änderung des Verlaufs der Stellung bestimmter, ausgewählter Achsen vermeiden. Dadurch kann in einer Weiterbildung die Sicherheit und/oder Bedienbarkeit des Roboters (weiter) verbessert werden.

Ein zulässiger Bereich für den einheitlichen Verlauf der Stellung der wenigstens einen bzw. ersten Achse, wird in einer Weiterbildung auf Basis bzw. in Abhängigkeit von einer vorgegebenen ein- oder mehrdimensionalen Beschränkung, ermittelt und der einheitliche Verlauf innerhalb dieses zulässigen Bereichs bzw. derart bzw. mit der Maßgabe vorgegeben, dass er innerhalb dieses zulässigen Bereichs liegt. In einer Ausführung weist die vorgegebene Beschränkung eine ein- oder beidseitige Stellwegbegrenzung der wenigstens einen bzw. ersten Achse und/oder eine Begrenzung zur Vermeidung einer Eigenkollision des Roboters und/oder einer Kollision des Roboters mit einem oder mehreren Hindernissen in seinem Arbeitsraum auf.

Hierdurch kann in einer Ausführung die vorgegebene Beschränkung vorteilhaft, insbesondere einfach und/oder zuverlässig, eingehalten, insbesondere also (Eigen)Kollisionen bzw. Überschreitungen von Stellwegbegrenzung vermieden werden.

Der zulässige Bereich wird auf Basis bzw. in Abhängigkeit von Extrema für die weitere bzw. zweite Endeffektorpose, in einer Weiterbildung auf Basis bzw. in Abhängigkeit von einer konvexen Hülle eines vorgegebenen Bereichs (zulässiger) weiterer bzw. zweiter Endeffektorposen und/oder auf Basis bzw. in Abhängigkeit von virtuellen Überführungen zwischen der einen bzw. ersten Endeffektorpose und diesen Extrema und/oder auf Basis bzw. in Abhängigkeit von einer Schnittmenge zulässiger Einzelbereiche für je eine weitere bzw. Endeffektorpose, insbesondere einer Schnittmenge zulässiger Einzelbereiche für je ein Extremum, ermittelt.

Hierdurch kann in einer Ausführung die vorgegebene Beschränkung besonders vorteilhaft, insbesondere einfach(er) und/oder zuverlässig(er), eingehalten werden.

Zusätzlich wird in einer Ausführung der einheitliche Verlauf auf Basis eines vorgegebenen ein- oder mehrdimensionalen Gütekriteriums vorgegeben. Dadurch kann in einer Ausführung der einheitliche Verlauf innerhalb des zulässigen Bereichs besonders vorteilhaft und/oder automatisch vorgegeben werden.

In einer Ausführung ist bzw. wird der einheitliche Verlauf auf Basis bzw. in Abhängigkeit von einem Laufparameter, in einer Weiterbildung auf Basis bzw. in Abhängigkeit von einer Endeffektorkoordinate bzw. Koordinate einer Endeffektorpose oder einer Bahnabschnittslänge, parametrisiert, insbesondere diskretisiert.

Hierdurch können in einer Ausführung die Stellungen der wenigstens einen bzw. ersten Achse und/oder der wenigstens einen weiteren bzw. zweiten Achse besonders vorteilhaft, insbesondere einfach und/oder zuverlässig, ermittelt werden.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
- Mittel zum Vorgeben desselben, einheitlichen Verlaufs der Stellung (für) wenigstens eine(r) Achse des Roboters, insbesondere in Abhängigkeit von einer Aktivierung eines Kontroll-Betriebsmodus und/oder vorab, für
   - die Überführung zwischen der einen Endeffektorpose und der einen weiteren Endeffektorpose und
   - Überführungen zwischen der einen Endeffektorpose und einer Schar anderer weiterer Endeffektorposen
      dieser Achse; und
- Mittel zum Kommandieren unterschiedlicher Verläufe der Stellung wenigstens einer weiteren Achse des Roboters, insbesondere beim Überführen,
   - für die Überführung zwischen der einen Endeffektorpose und der einen weiteren Endeffektorpose und
   - die Überführung zwischen der einen Endeffektorpose und wenigstens einer der anderen weiteren Endeffektorposen.

In einer Ausführung weist das System bzw. sein(e) Mittel auf:
- Mittel zum Kommandieren von Stellungen der wenigstens einen Achse und/oder der wenigstens einen weiteren Achse auf Basis des einheitlichen Verlaufs; und/oder
- Mittel zum Kommandieren von Stellungen der wenigstens einen Achse auf Basis vorgegebener Endeffektorposen; und/oder
- Mittel zum Kommandieren von Stellungen der wenigstens einen weiteren Achse auf Basis vorgegebener Stellungen der wenigstens einen Achse und/oder vorgegebener Endeffektorposen; und/oder
- Mittel zum Vorgeben der wenigstens einen Achse auf Basis einer Benutzerauswahl; und/oder
- Mittel zum Ermitteln eines zulässigen Bereichs für den einheitlichen Verlauf der Stellung der wenigstens einen Achse, insbesondere auf Basis einer vorgegebenen Beschränkung, und Vorgeben des einheitlichen Verlaufs innerhalb dieses zulässigen Bereichs; und/oder
- Mittel zum Ermitteln des zulässigen Bereichs auf Basis von Extrema für die weitere Endeffektorpose, insbesondere einer konvexen Hülle eines vorgegebenen Bereichs weiterer Endeffektorposen, virtueller Überführungen zwischen der einen Endeffektorpose und den Extrema und/oder auf Basis einer Schnittmenge zulässiger Einzelbereiche für je eine weitere Endeffektorpose; und/oder
- Mittel zum Vorgeben des einheitlichen Verlaufs auf Basis eines vorgegebenen Gütekriteriums; und/oder
- Mittel zum Parametrisieren, insbesondere Diskretisieren, des einheitlichen Verlaufs auf Basis eines Laufparameters, insbesondere einer Endeffektorkoordinate oder Bahnabschnittslänge.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern bzw. regeln kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel. In einer Ausführung weist das System den Roboter auf.

Der Roboter, in einer Weiterbildung ein Roboterarm, weist in einer Ausführung wenigstens drei, insbesondere wenigstens sechs, in einer Ausführung wenigstens sieben, (Bewegungs)Achsen bzw. Gelenke, insbesondere Drehgelenke, auf. Zusätzlich oder alternativ weist der Roboter in einer Ausführung eine mobile Basis, insbesondere ein Fahrwerk, und/oder eine oder mehrere Linearachsen auf, auf der in einer Weiterbildung der Roboterarm angeordnet ist.

Bei solchen Robotern kann die vorliegende Erfindung mit besonderem Vorteil verwendet werden.

Eine Pose weist in einer Ausführung eine ein-, zwei- oder dreidimensionale Position und/oder eine ein-, zwei- oder dreidimensionale Orientierung auf, sie kann insbesondere hieraus bestehen bzw. hierdurch definiert sein.

In einer besonders vorteilhaften Anwendung ist der Roboter ein Patientenpositionierroboter ("PPR") mit einem, insbesondere sechsachsigen, Roboterarm, der auf einer Linearachse angeordnet ist, wobei in einer Ausführung die Linearachse die erste Achse ist, insbesondere als erste Achse ausgewählt wird, und/oder die erste und zweite Endeffektorpose sich nur in einer Orientierung bzw. Drehlage um eine Referenzrichtung einer Bestrahlungseinheit unterscheiden, insbesondere der einheitliche Verlauf auf Basis dieser Orientierung bzw. Drehlage parametrisiert, insbesondere diskretisiert, ist bzw. wird. Dann ändert sich in einer Ausführung die Stellung der Linearachse nur bei einer Änderung dieser Orientierung bzw. Drehlage und bleibt bei allen Änderungen der anderen Endeffektorkoordinate, insbesondere also dessen Position und/oder Orientierung um Achsen quer zur Referenzrichtung der Bestrahlungseinheit, vorteilhaft konstant.

Gleichwohl ist die vorliegende Erfindung natürlich nicht hierauf beschränkt, sondern kann vorteilhaft insbesondere bei Variation der Lage von Greifobjekten auf einem Fördermittel und/oder deren Ablageort, Bearbeitung von insbesondere weit voneinander entfernten, Punkten auf einem Bauteil, insbesondere einer Karosserie oder dergleichen, deren Lage sich von Bauteil zu Bauteil unterscheidet, sowie für andere Robotereinsätze verwendet werden, ohne hierauf beschränkt zu sein.

Weitere Vorteile und Merkmale ergeben sich aus den Unteransprüchen und den Ausführungsbeispielen. Hierzu zeigt, teilweise schematisiert:
- Fig. 1:: ein System nach einer Ausführung der vorliegenden Erfindung mit einem Roboter mit einer Linearachse und einem darauf angeordneten Roboterarm mit einem Endeffektor;
- Fig. 2:: einen zulässigen Bereich für den einheitlichen Verlauf der Stellung der Linearachse; und
- Fig. 3:: ein Verfahren zum Überführen des Endeffektors zwischen einer Endeffektorpose und einer weiteren Endeffektorpose nach einer Ausführung der vorliegenden Erfindung.

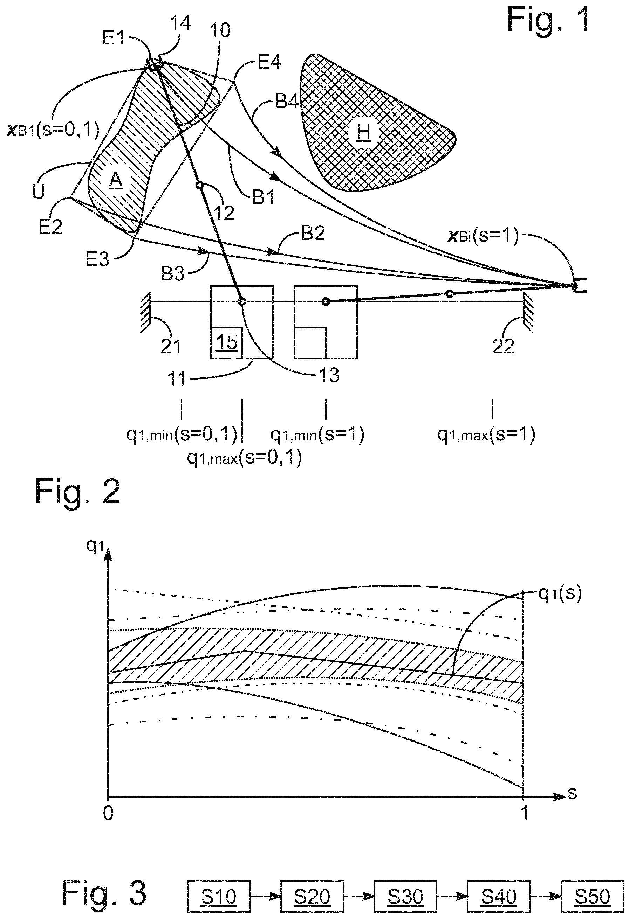

Fig. 1 zeigt ein System nach einer Ausführung der vorliegenden Erfindung mit einem Roboter mit einer Basis 11, die auf einer Linearachse mit Stellwegbegrenzungen 21, 22 verfahrbar ist, einem Roboterarm 10 mit einem Drehgelenk 12, der in einem weiteren Drehgelenk 13 an der Basis 11 angeordnet ist und einen Endeffektor 14 aufweist, und einer Robotersteuerung 15.

Der Endeffektor 14 soll von beliebigen Ausgangs-Endeffektorposen x innerhalb eines vorgegebenen Ausgangs-Bereichs A in dieselbe Ziel-Endeffektorpose überführt werden, ohne mit einem Hindernis H zu kollidieren, wobei diese Posen jeweils (durch) die zweidimensionale Position des Endeffektors 14 in der Bildebene der Fig. 1 (definiert) sind und der Roboter mit den beiden Drehgelenken 12, 13 und der Linearachse bzw. diesen drei Achsen bezüglich dieser Aufgabe redundant ist.

In einem ersten offline-Schritt S10 werden der Ausgangs-Bereich A vorgegeben, eine konvexe Hülle U um diesen Bereich A gelegt und von allen vier Eckpunkten E1 - E4 dieser Hülle, die die Extrema der Schar möglicher bzw. zugelassener Ausgangs-Endeffektorposen bilden, virtuelle Überführungen B1 - B4 zwischen den Extrema und der Ziel-Endeffektorpose unter Berücksichtigung der Stellwegbegrenzungen 21, 22 und einer Vermeidung einer Kollision mit dem Hindernis H geplant.

Zur Verdeutlichung ist in Fig. 1 der Roboter exemplarisch in zwei Stellungen seiner Linearachse eingezeichnet, in denen sein Endeffektor die Endeffekorpose ***x***_{B1}(s=0,1) bzw. ***x***_{B1}(s=1) einnimmt bzw. aufweist.

In einem zweiten offline-Schritt S20 wird für jede dieser virtuellen Überführungen B1 - B4 bzw. Extrema E1 - E4 jeweils ein zulässiger Einzelbereich für die Stellungen der Linearachse ermittelt.

Hierzu sind in Fig. 1 die Grenzen q_{1, min}, q_{1, max} des zulässigen Einzelbereichs für die Überführung B1 bzw. vom Extremum E1 in die Ziel-Endeffektorpose für zwei Werte s=0,1, s=1 eines Laufparameters in Form einer normierten Bahnabschnittslänge 0 ≤ s ≤ 1 dargestellt.

In Fig. 2 sind diese Grenzen strichpunktiert über dem Laufparameter s angedeutet, die entsprechenden Grenzen der zulässigen Einzelbereiche für die anderen Überführungen B2 - B4 bzw. von den Extrema E2 - E4 in die Ziel-Endeffektorpose gestrichelt, gepunktet bzw. doppel-strichpunktiert. Sie werden in diskreten Schritten ds = 0,1 ermittelt.

Dann wird in Schritt S20 ein zulässiger (Gesamt)Bereich für einen einheitlichen Verlauf q₁(s) der Stellung der Linearachse als Schnittmenge dieser zulässigen Einzelbereiche ermittelt, der in Fig. 2 schraffiert angedeutet ist.

Anschließend wird in einem dritten offline-Schritt S30 der einheitliche Verlauf q₁(s) auf Basis eines vorgegebenen Gütekriteriums vorgegeben, beispielsweise derart, dass ein mittlerer Abstand zu den Grenzen des zulässigen (Gesamt)Bereichs maximal ist oder dergleichen.

Soll nun der Endeffektor 14 aus irgendeiner der Schar zulässiger Ausgangs-Endeffektorposen A in die Ziel-Endeffektorpose überführt werden, wird in einem ersten online-Schritt S40 hierfür eine Bahn geplant und mit dem Laufparameter 0 ≤ s ≤ 1 parametrisiert (***x***(s)).

In einem zweiten online-Schritt S50 werden für diskrete Schritte ds dieses Laufparameters jeweils aus dem vorgegebenen einheitlichen Verlauf q₁(s) die jeweilige Stellung der Linearachse ermittelt, aus dieser Stellung der Linearachse und der entsprechenden Endeffektorpose x(s) die Stellungen der beiden Drehgelenke 12, 13 ermittelt und diese Stellungen kommandiert.

Auf diese Weise wird sichergestellt, dass die Linearachse für jede Überführung aus irgendeiner der Ausgangs-Endeffektorposen A in die Ziel-Endeffektorpose dasselbe, vorhersagbare bzw. reproduzierbare Verhalten aufweist. Zudem kann durch die offline-Vorgabe des einheitlichen Verlaufs q₁(s) die Rechenlast reduziert werden. Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

So können beispielsweise zusätzlich oder alternativ auch beliebige Ziel-Endeffektorposen innerhalb eines vorgegebenen Ziel-Bereichs vorgesehen werden. Anstelle einer normierten Bahnabschnittslänge s kann vorteilhafterweise auch direkt eine Endeffektorkoordinate verwendet werden, beispielsweise der sogenannte Kickwinkel eines Endeffektors eines Patientenpositionierroboters um eine Referenzrichtung einer Bestrahlungseinheit.

In einer Ausführung kann analog offline ein einheitlicher Verlauf der Stellung der Linearachse des Patientenpositionierroboters vorgegeben werden, wie vorstehend mit Bezug auf S10 - S30 erläutert, anschließend eine Bahn der sechs Freiheitsgrade des Endeffektors einschließlich dieses Kickwinkels geplant werden wie vorstehend mit Bezug auf S40 erläutert, und dann für diese Bahn bzw. Kickwinkel jeweils aus dem vorgegebenen einheitlichen Verlauf der Stellung der Linearachse für diskrete Kickwinkeländerungen jeweils die zugehörige Stellung der Linearachse und hieraus die Stellung des Arms des Patientenpositionierroboters bzw. dessen Achsstellungen ermittelt und kommandiert werden.

### Bezugszeichenliste

- 10: Roboterarm
- 11: Roboterbasis
- 12, 13: Roboterarmdrehgelenk (weitere bzw. zweite Achse)
- 14: Endeffektor
- 15: Robotersteuerung
- 21, 22: Linearachsen-Stellwegbegrenzung
- A: Ausgangs-Bereich
- B1 - B4: virtuelle Überführung
- E1 - E4: Extremum
- H: Hindernis
- U: Hülle
- x: 2-D-Position des Endeffektors (Endeffektorpose)
- s: Bahnabschnittslänge (Laufparameter)
- q,: Stellung der ersten bzw. Linearachse

## Patentansprüche

1. Verfahren zum Überführen eines Endeffektors (14) eines Roboters zwischen einer Endeffektorpose und einer weiteren Endeffektorpose, wobei, insbesondere in Abhängigkeit von einer Aktivierung eines Kontroll-Betriebsmodus,
- für wenigstens eine Achse (q₁) des Roboters, insbesondere vorab, für
- die Überführung zwischen der einen Endeffektorpose und der einen weiteren Endeffektorpose und
- Überführungen zwischen der einen Endeffektorpose und einer Schar anderer weiterer Endeffektorposen
derselbe, einheitliche Verlauf (q₁(s)) der Stellung dieser Achse vorgegeben ist (S30) und
- für wenigstens eine weitere Achse (12, 13) des Roboters, insbesondere beim Überführen,
- für die Überführung zwischen der einen Endeffektorpose und der einen weiteren Endeffektorpose und
- die Überführung zwischen der einen Endeffektorpose und wenigstens einer der anderen weiteren Endeffektorposen
unterschiedliche Verläufe der Stellung dieser weiteren Achse kommandiert werden (S50),
**dadurch gekennzeichnet,**
**dass** ein zulässiger Bereich für den einheitlichen Verlauf der Stellung der wenigstens einen Achse, insbesondere auf Basis einer vorgegebenen Beschränkung, ermittelt (S20) und der einheitliche Verlauf innerhalb dieses zulässigen Bereichs vorgegeben wird und,
**dass**
- der zulässige Bereich auf Basis von Extrema (E1 - E4) für die weitere Endeffektorpose
- insbesondere einer konvexen Hülle (U) eines vorgegebenen Bereichs (A) weiterer Endeffektorposen;
- virtueller Überführungen (B1 - B4) zwischen der einen Endeffektorpose und den Extrema; und/oder
- auf Basis einer Schnittmenge zulässiger Einzelbereiche für je eine weitere Endeffektorpose
ermittelt wird.

2. Verfahren nach Anspruch 1, **dadurch gekennzeichnet, dass** Stellungen der wenigstens einen Achse und/oder der wenigstens einen weiteren Achse auf Basis des einheitlichen Verlaufs kommandiert werden.

3. Verfahren nach einem der vorhergehenden Ansprüche, **dadurch gekennzeichnet, dass** Stellungen der wenigstens einen Achse auf Basis vorgegebener Endeffektorposen kommandiert werden.

4. Verfahren nach einem der vorhergehenden Ansprüche, **dadurch gekennzeichnet, dass** Stellungen der wenigstens einen weiteren Achse auf Basis vorgegebener Stellungen der wenigstens einen Achse und/oder vorgegebener Endeffektorposen kommandiert werden.

5. Verfahren nach einem der vorhergehenden Ansprüche, **dadurch gekennzeichnet, dass** die wenigstens eine Achse auf Basis einer Benutzerauswahl vorgegeben wird.

6. Verfahren nach Anspruch 1 **dadurch gekennzeichnet, dass** der einheitliche Verlauf auf Basis eines vorgegebenen Gütekriteriums vorgegeben wird.

7. Verfahren nach einem der vorhergehenden Ansprüche, **dadurch gekennzeichnet, dass** der einheitliche Verlauf auf Basis eines Laufparameters (s), insbesondere einer Endeffektorkoordinate oder Bahnabschnittslänge, parametrisiert, insbesondere diskretisiert, ist.

8. System zum Überführen eines Endeffektors (14) eines Roboters zwischen einer Endeffektorpose und einer weiteren Endeffektorpose, das zur Durchführung eines Verfahrens nach einem der vorhergehenden Ansprüche eingerichtet ist.

9. Computerprogrammprodukt mit einem Programmcode, der auf einem von einem Computer lesbaren Medium gespeichert ist, zur Durchführung eines Verfahrens nach einem der Ansprüche 1-7.

## Claims

1. Method for transferring an end effector (14) of a robot between one end effector pose and one further end effector pose, wherein, in particular in accordance with an activation of a control operation mode,
- for at least one axis (qi) of the robot, in particular in advance, for
- the transfer between the one end effector pose and the one further end effector pose, and
- transfers between the one end effector pose and a group of other further end effector poses,
the same uniform profile (q₁(s)) of the position of this axis is predefined (S30) and
- for at least one further axis (12, 13) of the robot, in particular during the transfer,
- for the transfer between the one end effector pose and the one further end effector pose and
- the transfer between the one end effector pose and at least one of the other further end effector poses,
different profiles of the position of this further axis are commanded (S50),
**characterized in that**
an admissible range for the uniform profile of the position of the at least one axis is determined (S20), in particular on the basis of a predefined restriction, and the uniform profile is predefined within this admissible range, and
**in that**
- the admissible range is determined on the basis of extremes (E1-E4) for the further end effector pose
- in particular of a convex envelope (U) of a predefined region (A) of further end effector poses;
- virtual transfers (B1-B4) between the one end effector pose and the extremes; and/or
- on the basis of an intersection of admissible individual ranges for in each case one further end effector pose.

2. Method according to Claim 1, **characterized in that** positions of the at least one axis and/or of the at least one further axis are commanded on the basis of the uniform profile.

3. Method according to one of the preceding claims, **characterized in that** positions of the at least one axis are commanded on the basis of predefined end effector poses.

4. Method according to one of the preceding claims, **characterized in that** positions of the at least one further axis are commanded on the basis of predefined positions of the at least one axis and/or predefined end effector poses.

5. Method according to one of the preceding claims, **characterized in that** the at least one axis is predefined on the basis of a user selection.

6. Method according to Claim 1, **characterized in that** the uniform profile is predefined on the basis of a predefined quality criterion.

7. Method according to one of the preceding claims, **characterized in that** the uniform profile is parameterized, in particular discretized, on the basis of a running parameter (s), in particular an end effector coordinate or path section length.

8. System for transferring an end effector (14) of a robot between one end effector pose and one further end effector pose, the system being configured to perform a method according to one of the preceding claims.

9. Computer program product with a program code stored on a computer-readable medium, for performing a method according to one of Claims 1-7.

## Revendications

1. Procédé de transfert d'un effecteur d'extrémité (14) d'un robot entre un poste d'effecteur d'extrémité et un autre poste d'effecteur d'extrémité, dans lequel, notamment en fonction d'une activation d'un mode de fonctionnement de contrôle,
- pour au moins un axe (qi) du robot, notamment à l'avance, pour
- le transfert entre l'un des postes d'effecteur d'extrémité et l'un des autres postes d'effecteur d'extrémité et
- des transferts entre l'un des postes d'effecteur d'extrémité et un groupe d'autres postes d'effecteur d'extrémité,
la même évolution uniforme (q₁(s)) de la position de cet axe est prédéfinie (S30) et
- pour au moins un autre axe (12, 13) du robot, notamment lors du transfert,
- pour le transfert entre l'un des postes d'effecteur d'extrémité et l'un des autres postes d'effecteur d'extrémité et
- le transfert entre l'un des postes d'effecteur d'extrémité et au moins l'un des autres postes d'effecteur d'extrémité,
des évolutions différentes de la position de cet autre axe sont commandées (S50),
**caractérisé en ce**
**qu'**une plage admissible pour l'évolution uniforme de la position de l'au moins un axe est déterminée (S20), notamment sur la base d'une limitation prédéfinie, et l'évolution uniforme est prédéfinie au sein de cette plage admissible et,
en ce que
- la plage admissible est déterminée sur la base d'extrêmes (E1 - E4) pour l'autre poste d'effecteur d'extrémité,
- notamment d'une enveloppe convexe (U) d'une plage prédéfinie (A) d'autres postes d'effecteur d'extrémité ;
- de transferts virtuels (B1 - B4) entre l'un des postes d'effecteur d'extrémité et les extrêmes ; et/ou
- sur la base d'une intersection de plages individuelles admissibles pour chaque autre poste d'effecteur d'extrémité.

2. Procédé selon la revendication 1, **caractérisé en ce que** les positions de l'au moins un axe et/ou de l'au moins un autre axe sont commandées sur la base de l'évolution uniforme.

3. Procédé selon l'une quelconque des revendications précédentes, **caractérisé en ce que** les positions de l'au moins un axe sont commandées sur la base de postes d'effecteur d'extrémité prédéfinis.

4. Procédé selon l'une quelconque des revendications précédentes, **caractérisé en ce que** les positions de l'au moins un autre axe sont commandées sur la base de positions prédéfinies de l'au moins un axe et/ou de postes d'effecteurs d'extrémité prédéfinis.

5. Procédé selon l'une quelconque des revendications précédentes, **caractérisé en ce que** l'au moins un axe est prédéfini sur la base d'une sélection de l'utilisateur.

6. Procédé selon la revendication 1, **caractérisé en ce que** l'évolution uniforme est prédéfinie sur la base d'un critère de qualité prédéfini.

7. Procédé selon l'une quelconque des revendications précédentes, **caractérisé en ce que** l'évolution uniforme est paramétrée, notamment discrétisée, sur la base d'un paramètre de marche (s), notamment une coordonnée d'effecteur d'extrémité ou une longueur de section de trajectoire.

8. Système de transfert d'un effecteur d'extrémité (14) d'un robot entre un poste d'effecteur d'extrémité et un autre poste d'effecteur d'extrémité, adapté pour mettre en œuvre un procédé selon l'une quelconque des revendications précédentes.

9. Produit de programme informatique avec un code de programme stocké sur un support lisible par un ordinateur, pour la mise en œuvre d'un procédé selon l'une quelconque des revendications 1 à 7.
